# FASCICULE DE BREVET EUROPEEN

(11) **EP 1 620 520 B1**
(45) Date de publication et mention de la délivrance du brevet: **23.01.2013**
(21) Numéro de dépôt: 04742637.4
(22) Date de dépôt: 05.05.2004
(51) Int. Cl.: C09J 5/10, C08J 5/12, B29C 65/00, C09J 183/04

(54) **PROCEDE DE COLLAGE DE SUPPORTS FIBREUX ENDUITS DE SILICONE**
VERFAHREN ZUR VERKLEBUNG VON SILIKONBESCHICHTETEN FASERHALTIGEN TRÄGERN
METHOD FOR BONDING FIBROUS SILICONE-COATED SUPPORTS

(30) Priorité: 07.05.2003 FR 0305556
(43) Date de publication de la demande: 01.02.2006
(73) Titulaire: Bluestar Silicones France, 69486 Lyon (FR)
(72) Inventeur: POUCHELON, Alain, F-69330 MEYZIEU (FR); QUEMIN, Maryline, F-69003 LYON (FR); DUMONT, Laurent, F-73290 LA MOTTE SERVOLEX (FR); LAFAYSSE, Francis, F-39230 SAINT GENIS-LAVAL (FR)
(74) Mandataire: Mekki, Boualem
(86) Numéro de dépôt international: PCT/FR2004/001075
(87) Numéro de publication internationale: WO 2004/101696

(56) Documents cités:
- EP-A- 0 131 854
- EP-A- 1 225 211
- WO-A-99/43753
- US-A- 4 569 870
- US-A- 4 889 576
- US-A- 5 279 894

## Description

L'invention concerne le collage de matériaux fibreux, en particulier des supports souples tels que des supports tissés ou des supports non-tissés, comportant au moins un revêtement silicone obtenu par enduction ou par imprégnation d'au moins l'une de leurs faces, à l'aide d'au moins une composition silicone liquide au moment de cette opération (notamment de type RTV2 ou dilutions de LSR ou d'EVC) réticulable en élastomère. Des vernis (silicones ou copolymères) peuvent être appliqués sur de tels revêtements.

Les supports souples concernés sont notamment choisis parmi les toiles textiles éventuellement revêtues d'une couche d'élastomère silicone sur laquelle est éventuellement appliqué le vernis anti-salissures, de telles toiles étant susceptibles d'être utilisées pour la fabrication :
1. de textiles architecturaux (éléments d'architecture textile) ;
2. ou bien encore de supports souples différents des textiles architecturaux.
S'agissant du domaine d'application 1, il doit être précisé que dans tout le présent exposé et au sens de la présente invention, le terme "textile architectural", on entend un tissu ou non-tissé et plus généralement tout support fibreux destiné après revêtement à la confection :
- d'abris, de structures mobiles, de bâtiments textiles, de cloisons, de portes souples, de bâches, de tentes, de stands ou de chapiteaux ;
- de mobiliers, de bardages, d'écrans publicitaires, de brise-vent ou panneaux filtrants ;
- de protections solaires, de plafonds et de stores.
S'agissant du domaine d'application 2, on indiquera que ces supports souples différents des textiles architecturaux peuvent être par exemple, ceux destinés à la fabrication de notamment :
- sacs gonflables utilisés pour la protection des occupants d'un véhicule, en anglais "airbag",
- tresses de verre (gaines en tissu de verre de protection thermique et diélectrique pour fil électrique),
- bandes transporteuses, tissus coupe-feu ou isolants thermiques,
- vêtements,
- compensateurs (manchons flexibles d'étanchéité pour tuyauterie).

L'enduction silicone est définie comme l'action d'enduire un support fibreux, notamment un textile, à l'aide d'une composition silicone liquide réticulable, puis de faire réticuler le film enduit sur le support, de façon à produire un revêtement destiné notamment à le protéger, à lui conférer des qualités particulières, par exemple à lui conférer des caractéristiques d'hydrophobie/d'oléophobie, d'imperméabilisation ou des propriétés mécaniques améliorées ou encore propre à en modifier l'aspect.

L'imprégnation est quant à elle définie comme l'action de faire pénétrer un liquide très fluide à base de silicone réticulable à l'intérieur d'un support fibreux (pénétration à coeur) puis de faire réticuler le silicone pour conférer au support des propriétés du type de celles évoquées ci-dessus.

En pratique, les composites obtenus par enduction ou par imprégnation d'élastomères silicones sur des supports textiles présentent de nombreux avantages liés aux caractéristiques intrinsèques des silicones, à savoir, notamment, une bonne souplesse, une bonne résistance mécanique et un comportement au feu amélioré. Par ailleurs, à la différence des élastomères traditionnels, les silicones leur confèrent entre autres une protection appropriée du fait de leur hydrophobie et de leur excellente résistance aux agressions chimiques, thermiques et climatiques ainsi qu'une forte longévité.

Mais dans le domaine de l'architecture textile, qui constitue un débouché important pour les susdits composites, les protagonistes formulent parfois d'autres exigences, qui sont notamment les suivantes :
o résistance aux salissùres,
o bonnes caractéristiques d'aspect notamment au regard de la coloration et de la brillance,
o aptitude au collage pour permettre l'assemblage aisé des composites deux à deux,
o faible coefficient de glissement pour favoriser la manipulation du composite,
o bonne cohésion du composite.
Ces propriétés peuvent être apportées par un revêtement de surface approprié, un vernis (par exemple en silicone), qui aurait avantage à :
o pouvoir être aisément étalé sur une couche silicone, voire non silicone (par exemple PolyChlorure de Vinyle, Polyuréthanne, PolyAmide),
o adhérer parfaitement à cette couche silicone ou non silicone,
o et plus généralement être de mise en oeuvre facile et économique sur le plan industriel.

Au-delà de la question des revêtements et des vernis de ces composites siliconés pour l'architecture textile, il est souvent nécessaire d'assembler différents pièces ou éléments de ces composites, pour les consolider localement (renforts) ou pour rabouter des pièces entre elles en vue d'en augmenter la surface ou de procéder à la confection de l'article final.

Cette opération se fait souvent par couture, ce qui conduit à un assemblage convenable mais qui engendre tout de même certains inconvénients. En effet, les piqûres d'aiguilles sont autant de trous dans les composites, ce qui peut porter préjudice à leurs propriétés d'étanchéité et à leur résistance aux agressions chimiques, thermiques et climatiques. La conception finale correspondante peut aussi en être limitée.

Une autre façon de procéder est le collage. Il est cependant difficile de trouver des colles suffisamment puissantes pour atteindre les performances requises.

Ainsi, le brevet EP-B-0 219 075 et son correspondant US-B-4,889,576, révèlent que des textiles enduits de silicones peuvent être collés au moyen de bandes de caoutchoucs silicones comme les Elastomères Vulcanisables à Chaud (EVC ou HCR selon l'appellation anglo-saxonne) qui sont disposées entre les deux pièces de composites à assembler. Il s'agit de bandes adhésives plastiques (non liquides) à température ambiante (plasticité Williams comprise entre 170 et 600, e.g. 280). Une présentation de l'adhésif silicone sous cette forme pose problème car elle entraîne une certaine lourdeur de mise en oeuvre avec en particulier la nécessité d'une vulcanisation de l'adhésif lors d'une phase de compression - chauffage où tant la pression appliquée que la température sont élevées. Par ailleurs, cette présentation implique une préparation spécifique dont le coût n'est pas négligeable.

La gomme EVC utilisée comme adhésif est par exemple du type M^{Vi}DD^{Vi}M^{Vi} ; avec la définition suivante des motifs siloxy, M : (CH₃)₃SiO_{1/2}, M^{Vi} : (CH₃)₂ ViSiO_{1/2}, D : (CH₃)₂SiO_{2/2}, D^{Vi} : (CH₃)ViSiO_{2/2}, Vi = vinyle. Cette composition de gomme comprend également un catalyseur radicalaire de durcissement/réticulation : 2,4-dichlorobenzoylperoxyde et une charge de silice traitée par l'HexaMéthylDisilaZane. Cette gomme réticulable sert à produire des bandes adhésives par moulage et découpage. Ces dernières doivent être ensuite placées dans la zone de chevauchement des pièces composites à assembler. Interviennent ensuite une mise sous pression (2 kg / 5 cm) et un chauffage (180°C-10 min). Il est clair que toutes ces manipulations ne sont pas propices à l'optimisation des coûts industriels. Le seuil de résistance à la tension mesurée pour les assemblages avec des EVC peroxydes selon ces brevets est de l'ordre de 200 N/3 cm.

La nomenclature adoptée dans le présent exposé pour définir les motifs siloxy est la suivante :
- M : (R°)₃SiO₁₂,
- M^{Vi} : (R°)₂ (Vi)SiO_{1 2},
- D : (R°)₂SiO_{2.2},
- D^{Vi} : (R°)(Vi)SiO_{2.2},
- M' : (R°)₂ (H)SiO_{1/2.}
- D' : (R°)(H)SiO_{2/2},
- M^{OH} : (R°)₂ (OH)SiO₁₂,
- D^{OH} : (R°)(OH)SiO₂₂,
- T : (R°)SiO₃₂,
- Q : SiO₄₂,
- R° est choisi parmi les groupes alkyles linéaires ou ramifiés ayant de 1 à 8 atomes de carbone inclus (e.g. méthyle, éthyle, isopropyle, tertiobutyle et n-hexyle), éventuellement substitués par au moins un atome d'halogène (e.g.trifluoro-3,3,3 propyle), et ainsi que parmi les groupes aryles (e.g phényle), les radicaux alcényles en C2-C4 (e.g. vinyles),
- Vi = vinyle, cet alcényle pourrait substitué par tout groupement alcényle approprié.

EP-A-1225211 décrit un adhésif à base de silicone, comprenant un polyorganosiloxane présentant par molécule 2 groupes alcényles, une charge mécanique renforçante, une quantité catalytiquement efficace d'un catalyseur à base platinique, ainsi qu'un certain nombre d'adjuvants. L'utilisation de cette composition adhésive pour joindre des substrats revêtus d'un élastomère silicone est également mentionnée dans ce document.

Compte tenu de cet art antérieur, l'un des objectifs essentiels de la présente invention est de fournir un procédé amélioré d'assemblage de pièces composites fibres/silicone à l'aide d'un élastomère silicone, lequel procédé se devant d'être économique et peu coûteux à mettre en oeuvre.

Un autre objectif essentiel de la présente invention est de fournir un procédé amélioré d'assemblage de textiles ou de non-tissés enduits et/ou imprégnés de silicone, à l'aide d'un élastomère silicone, lequel procédé se devant de conduire à un assemblage particulièrement résistant à une sollicitation en tension, par exemple ayant une force de pelage supérieure ou égale à 80 N/5 cm.

Un autre objectif essentiel de la présente invention est de fournir un nouvel adhésif silicone performant pour l'assemblage de pièces composites fibres/silicone.

Ces objectifs, parmi d'autres, ont été atteints par les inventeurs qui ont découvert, de façon tout à fait surprenante et inattendue, qu'il est tout à fait approprié de sélectionner à titre de colle pour textiles ou de non-tissés enduits et/ou imprégnés d'élastomère silicone, un autre élastomère silicone vulcanisable à chaud par voie radicalaire au moyen de peroxydes et dont la rhéologie est telle que cette colle à caractère liquide (non plastique) peut être déposée sur les composites à assembler, et ce en épaisseur suffisante et régulière, afin de bien contrôler le niveau de l'adhérence développée. Ainsi, cet adhésif est directement déposée "en place" et vulcanisée thermiquement, pour obtenir de manière aisée et économique un assemblage performant.

La présente invention concerne donc en premier lieu un procédé de collage de supports fibreux, tissés ou non, comprenant au moins un revêtement silicone, ce procédé étant du type de ceux consistant à faire se chevaucher les supports à coller, un adhésif à base de silicone étant inséré entre les supports, sur au moins une partie de la zone de chevauchement;
caractérisé en ce qu'il consiste essentiellement à :
- mettre en oeuvre au moins un adhésif silicone réticulable de la classe des Elastomères Silicones Pompables (ESP), se présentant sous forme liquide (pâte fluide) à température ambiante et ayant les caractéristiques rhéologiques suivantes
   ➢ borne de fluidité :
      viscosité Brookfield à 25°C en Pa.s:
         η ≥ 100, de préférence η ≥ 200
   ➢ vitesse d'extrusion :
      vitesse d'extrusion Ve en g.min⁻¹ mesurée selon un test Te défini dans la description:
         Ve ≤ 50, de préférence Ve ≤ 20 ;
- mettre cet adhésif liquide directement en forme et en place sur au moins l'un des supports à coller, dans leur zone de chevauchement ;
- maintenir en contact intime les supports encollés dans leur zone de chevauchement, de manière à éviter tout piégeage d'air à l'interface ;
- et à chauffer l'adhésif en place entre les supports ainsi maintenus en contact intime, de façon à permettre le collage des supports par réticulation de l'adhésif.

Conformément à l'invention, le test d'extrusion Te est réalisé au moyen d'un pistolet d'extrusion conçu pour recevoir des cartouches de volume 200 ml. Pour le test, la cartouche contient 100 à 150 g de produit à extruder parfaitement dégazé. La cartouche est équipée d'une canule d'extrusion de diamètre égal à 0,3 mm. La pression d'extrusion appliquée est de 6,2 bars à 25°C. Om mesure la quantité extrudée pendant 6 s. On effectue 3 mesures pour chaque échantillon et on fait la moyenne. Le résultat est exprimé en g.min⁻¹.

Ce procédé de mise en oeuvre simple et économique fait intervenir des adhésifs silicones liquides à température ambiante ayant notamment pour caractéristique de pouvoir être mis directement en forme et en place sur les supports à coller.

Les silicones concernés sont,
■ les Elastomères Silicones Pompables (ESP) thermodurcissables par réticulation radicalaire impliquant des motifs ≡Si-alcényle, à l'aide d'au moins un peroxyde et de type monocomposant.

De préférence, l'adhésif silicone retenu a la composition suivante :
(a) au moins un polyorganosiloxane (POS) présentant, par molécule, au moins deux groupes alcényles, de préférence en C₂-C₆ liés au silicium ;
(b) une charge minérale renforçante,
(c) une quantité catalytiquement efficace d'au moins un catalyseur :
   ➢ à base d'au moins un peroxyde organique
(d) éventuellement une charge complémentaire;
(f) éventuellement au moins un additif polyorganosiloxane dans lequel au moins 50% en nombre des atomes de silicium sont directement liés chacun à au moins un atome d'hydrogène;
(g) éventuellement au moins un promoteur d'adhérence;
(h) éventuellement au moins une résine polyorganosiloxane;
(i) et éventuellement des additifs fonctionnels pour conférer des propriétés spécifiques.

Selon un mode préféré, mais non limitatif, de mise en oeuvre du procédé selon l'invention, l'adhésif silicone liquide à température ambiante que l'on privilégie est formé
par au moins un Elastomère Silicone Pompable (ESP) thermodurcissable par réticulation radicalaire à l'aide d'au moins un peroxyde.

Le POS majoritaire de l'adhésif, à savoir le polyorganosiloxane (a), présente des motifs de formule :

Wₐ Z_{b} SiO_{(4-(a+b))/2} (a.1)

dans laquelle :
- W est un groupe alcényle,
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et a + b est compris entre 1 et 3,
au moins une partie des motifs (a.1) étant des motifs M (a+b=3);
et au moins une partie des autres motifs sont des motifs de formule moyenne :

Z_{C} SiO_{(4-c)/2} (a.2)

dans laquelle Z a la même signification que ci-dessus et c a une valeur comprise entre 0 et 3.

Ces polymères polyorganosiloxanes (a) sont avantageusement des polymères linéaires, dont la chaîne diorganopolysiloxanique est constituée essentiellement de motifs de formule Z₂SiO (motifs siloxy D). Cette chaîne est bloquée à chaque extrémité par un motif de formule Z₃Si_{0,5} (motifs siloxy M)et/ou un radical de formule OZ'. Dans ces formules :
- les symboles Z, identiques ou différents, représentent des radicaux hydrocarbonés monovalents tels que des radicaux alkyles, par exemple, méthyle, éthyle, propyle, octyle, octadécyle, etc..., des radicaux aryle, par exemple phényle, tolyle, xylyle, etc..., des radicaux aralkyle tels que benzyle, phényléthyle, etc..., des radicaux cycloalkyle et cycloalkényle tels que des radicaux cyclohexyle, cycloheptyle, cyclohexényle, etc..., des radicaux alkényle, par exemple des radicaux vinyle, allyle, etc..., des radicaux alkaryle, des radicaux cyanoalkyle tels qu'un radical cyanoéthyle, etc..., des radicaux halogénoalkyle, halogénoalkényle et halogénoaryle, tels que des radicaux chlorométhyle trifluoro-3,3,3 propyle, chlorophényle, dibromophényle, trifluorométhylphényle,
- le symbole R' représente un atome d'hydrogène, un radical alkyle ayant de 1 à 4 atomes de carbone, le radical bétaméthoxyéthyle.

De préférence, au moins 60 % des groupes Z représentent des radicaux méthyle. La présence, le long de la chaîne diorganopolysiloxanique, de faibles quantités de motifs autres que Z₂SiO, par exemple de motifs de formule ZSiO_{1,5} (motifs siloxy T) et/ou SiO₂ (motifs siloxy Q) n'est cependant pas exclue dans la proportion d'au plus 2 % (ces purcentages exprimant le nombre des motifs T et/ou Q pour 100 atomes de silicium).

A titre d'exemples concrets de motifs de formules Z₂SiO et Z₃SiO_{0,5} et de radicaux de formule OZ', peuvent être cités ceux de formules :

(CH₃)₂SiO, CH₃(CH₂=CH)SiO, CH₃(C₆H₅)SiO, (C₆H₅)₂SiO,

CH₃(C₂H₅)SiO, (CH₃CH₂CH₂) CH₃SiO, CH₃(n.C₃H₇)SiO,

(CH₃)₃SiO_{0,5}, (CH₃)₂(CH₂=CH)SiO_{0,5}, CH₃(C₆H₅)₂SiO_{0,5},

CH₃(C₆H₅) (CH₂=CH)SiO_{0,5},

OH, -OCH₃, -OC₂H₅, -O-n. C₃H₇, -O-iso.C₃H₇, -O-n.C₄H₉,

-OCH₂CH₂OCH₃.

Ces huiles POS sont commercialisées par les fabricants de silicone ou peuvent être fabriquées en opérant selon des techniques déjà connues.

La charge de renforcement b) est sélectionnée parmi les silices et/ou les alumines, de préférence parmi les silices.

A titre de silices utilisables, on vise des charges caractérisées par une fine taille de particules souvent inférieure ou égale à 0,1 µm et un rapport élevé de la surface spécifique au poids, généralement compris dans l'intervalle d'environ 50 mètres carrés par gramme à plus de 300 mètres carrés par gramme. Les silices de ce type sont des produits disponibles dans le commerce et sont bien connues dans la technique de la fabrication des caoutchoucs de silicone. Ces silices peuvent être des silices colloïdales, des silices préparées par voie pyrogénique (silices dites de combustion ou de fumée) ou par des procédés humides (silices précipitées) ou des mélanges de ces silices.

La nature chimique et le procédé de préparation des silices susceptibles de former la charge (b) ne sont pas importants aux fins de la présente invention, pourvu que la silice soit capable d'exercer une action de renforcement dans l'adhésif élastomère fini. Bien entendu on peut utiliser aussi des coupages de différentes silices.

Ces poudres de silice présentent une taille moyenne de particule généralement voisine ou inférieure à 0,1 µm et une surface spécifique BET supérieure à 50 m²/g, de préférence comprise 50 et 400 m²/g, notamment entre 150 et 350 m²/g.

Ces silices sont éventuellement :
➢ prétraitées à l'aide d'au moins un agent de compatibilisation choisi dans le groupe des molécules qui satisfont à au moins deux critères :
   ❖ présenter une interaction forte avec la silice au niveau de ses liaisons hydrogène avec elle-même, et avec l'huile silicone environnante ;
   ❖ être elle-même, ou ses produits de dégradation, aisément évacués du mélange final par chauffage sous vide ou sous courant gazeux, et les composés de bas poids moléculaire sont donc préférés ;
➢ et/ou traitées in situ :
   - de manière spécifique à l'aide d'au moins une silice non traitée,
   - et/ou de manière complémentaire en utilisant au moins un agent de compatibilisation de nature similaire à celui utilisable en prétraitement et tel que défini ci-dessus.

Par traitement in situ de la charge siliceuse, on entend la mise en présence de la charge et de l'agent de compatibilisation en présence d'au moins une portion du polymère silicone POS (a) prépondérant susvisé. De manière particulièrement préférée, cela consiste essentiellement à introduire de l'agent de compatibilisation (AC) en deux temps dans le milieu de préparation :
○ d'une part, avant et/ou sensiblement simultanément à la mise en présence d'au moins une partie de l'huile silicone mise en oeuvre avec au moins une portion de la charge siliceuse utilisée, cette introduction d'AC (portion 1) s'opérant en une ou plusieurs fois et correspondant à une proportion inférieure ou égale à 8 %, de préférence à 5 % et, plus préférentiellement encore, à 3 % en poids sec par rapport à la charge totale ;
o et d'autre part (portion 2), après cette mise en présence d'huile silicone/charge.

Plus précisément, la méthode peut consister :
- à mélanger :
   - 100 parties en poids d'huile silicone,
   - 0 à 5 parties en poids d'eau,
   - 20 à 80 parties en poids de charge constituée par de la silice,
   - 1 à 20 parties en poids d'agent de compatibilisation,
- à laisser réagir, de préférence sous agitation,
- à chauffer le mélange obtenu, en choisissant un couple pression/température tel qu'il se produit une dévolatilisation d'au moins une partie de l'eau et des éléments volatils,
- à refroidir si nécessaire le mélange.

L'opération de mélange s'effectue à température et à pression normales et de préférence sous atmosphère inerte (N₂). Il convient d'ailleurs que dans ces conditions, l'huile silicone, l'eau mais également l'agent de compatibilisation se trouvent sous forme liquide pour faciliter le mélange.

L'agent de compatibilisation est choisi selon le mode de traitement (prétraitement ou in situ), il peut être par exemple sélectionné dans le groupe comprenant:
- les chlorosilanes,
- les polyorganocyclosiloxanes, tels que l'octaméthylcyclosiloxane (D4),
- les silazanes, de préférence les disilazanes, ou leurs mélanges, l'hexaméthyldisilazane (HMDZ) étant le silazane préféré et pouvant être associé au divinyltétraméthyl-disilazane,
- les polyorganosiloxanes présentant, par molécule, un ou plusieurs groupements hydroxyles liés au silicium,
- les amines telles que l'ammoniaque ou les alkylamines de bas poids moléculaire comme la diéthylamine,
- les acides organiques de bas poids moléculaire comme les acides formique ou acétique,
- et leurs mélanges.

Dans le cas du traitement in situ, l'agent de compatibilisation est de préférence mis en oeuvre en présence d'eau.

Pour plus de détails à cet égard, on peut se référer par exemple au brevet FR-B-2 764 894. En variante, on peut utiliser les méthodes de compatibilisation de l'art antérieur prévoyant un traitement précoce par le silazane (e.g. FR-A-2 320 324) ou un traitement tardif (e.g. EP-A-462 032) tout en sachant cependant que selon les silices utilisées leur emploi ne permettra en général pas d'obtenir les meilleurs résultats en termes de propriétés mécaniques, en particulier extensibilité, obtenus par un traitement en deux temps conforme à l'invention.

A titre d'alumine de renforcement utilisable comme charge (b), on emploie avantageusement une alumine hautement dispersible, dopée ou non de manière connue. Bien entendu, on peut utiliser aussi des coupages de différentes alumines. Comme exemples non limitatifs de pareilles alumines, on citera les alumines A 125, CR 125, D 65CR de la société BAÏKOWSKI. De préférence, la charge de renforcement utilisée est une silice de combustion, prise seule ou en mélange avec de l'alumine.

Sur le plan pondéral, on préfère mettre en oeuvre une quantité de charge renforçante (b) comprise entre 5 et 30, de préférence entre 7 et 20 % en poids par rapport à l'ensemble des constituants de la composition.

L'utilisation d'une charge complémentaire (d), de préférence non renforçante, est envisageable conformément à l'invention.

Parmi les charges complémentaires (d) non renforçantes, on peut citer notamment celles sélectionnées dans le groupe comprenant :
les silices colloïdales, les poudres de silice de combustion et de précipitation, les terres de diatomées, le quartz broyé le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte ou leurs mélanges.

Ces charges complémentaires (d) ont une granulométrie généralement comprise entre 0,1 et 300 µm et une surface BET inférieure à 100 m²/g.

Dans le cas présent, où l'adhésif comprend au moins un ESP, le catalyseur (c) est un peroxyde organique qui peut être n'importe lequel de ceux qui agissent comme agents vulcanisants envers les compositions formatrices d'élastomères de silicones. Il peut ainsi s'agir de l'un quelconque des peroxydes ou peresters qu'il est connu d'employer avec les élastomères de silicone, par exemple le peroxyde de ditertiobutyle, le peroxyde de benzoyle, le peracétate de tertiobutyle, le peroxyde de dicumyle, le 2,5-diperbenzoate de 2,5-diméthylhexane et le bis(t-butylperoxy)-2,5 diméthyl-2,5 hexane.

Dans le cas du collage selon l'invention, on utilisera avantageusement un peroxyde qui est actif en l'absence de pression exercée, par exemple le peroxyde de monochlorobenzoyle ou le peroxyde de 2-4 dichlorobenzoyle.

S'agissant précisément des polyorganosiloxanes (e) ou (f) facultatifs, il s'agit de préférence de ceux comportant le motif siloxyle de formule :

H_{d} Le SiO_{(4-(g+h))/2} (ef.1)

dans laquelle :
- L est un groupe hydrocarboné monovalent, exempt d'action défavorable sur l'activité du catalyseur et choisi parmi les groupes alkyles ayant de 1 à 8 atomes de carbone inclus (éventuellement substitués par au moins un atome d'halogène), avantageusement parmi les groupes méthyle, éthyle, propyle et 3,3,3-trifluoropropyle et ainsi que parmi les groupes aryles et, avantageusement, parmi les radicaux xylyle, tolyle et phényle,
- d est 1 ou 2, g est 0, 1 ou 2 et g + h a une valeur comprise entre 1 et 3 ;
au moins une partie des autres motifs étant éventuellement des motifs de formule moyenne :

L_{g} SiO_{(4-i)/2} (ef.2)

dans laquelle L a la même signification que ci-dessus et i a une valeur comprise entre 0 et 3.

Les conditions propres à (e) : au moins 3 motifs ≡SiH par molécule : au moins 50% en nombre de motifs (e) à (f), s'appliquent par ailleurs.

La viscosité dynamique de ce polyorganosiloxane (e) ou (f) est au moins égale à 10 mPa.s et, de préférence elle est comprise entre 20 et 1000 mPa.s.

Le polyorganosiloxane (e) ou (f) peut être uniquement formé de motifs de formule (ef.1) ou comporter en plus des motifs de formule (ef.2).

Le polyorganosiloxane (e) ou (f) peut présenter une structure linéaire ramifiée cyclique ou en réseau.

Le groupe L a la même signification que le groupe Z ci-dessus.

Des exemples de motifs de formule (ex.1) sont :

H(CH₃)₂SiO_{1/2}, HCH₃SiO_{2/2}, H(C₆H₅)SiO_{2/2}

Les exemples de motifs siloxyles D de formule SiO_{4/2}, sont : diméthylsiloxyle, méthylphénylsiloxyle, diphénylsiloxyle, méthylsiloxyle et phénylsiloxyle.

Des exemples de polyorganosiloxanes (e) sont des composés linéaires et cycliques comme :
- les diméthylpolysiloxanes à extrémités hydrogénodiméthylsilyle,
- les copolymères à motifs (diméthyl)-(hydrogénométhyl)-polysiloxanes à extrémités triméthylsilyles,
- les copolymères à motifs (diméthyl)-(hydrogénométhyl)-polysiloxanes à extrémités hydrogénodiméthylsilyles,
- les hydrogénométhylpolysiloxanes à extrémités triméthylsilyles,
- les hydrogénométhylpolysiloxanes cycliques.

Les régulateurs de prise généralement associés au catalyseur métallique (e.g. platine) dans les LSR, sont des ralentisseurs de la réaction d'addition (inhibiteur de réticulation) bien connus. Ils sont classiquement choisis parmi les composés suivants :
- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés,
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule :

R - (R') C (OH) - C ≡ CH

formule dans laquelle :
- R est un radical alkyle linéaire ou ramifié, ou un radical phényle ;
- R' est H ou un radical alkyle linéaire ou ramifié, ou un radical phényle ;
- les radicaux R, R' et l'atome de carbone situé en α de la triple liaison pouvant éventuellement former un cycle ;
- le nombre total d'atomes de carbone contenu dans R et R' étant d'au moins 5, de préférence de 9 à 20.

Lesdits alcools sont, de préférence, choisis parmi ceux présentant un point d'ébullition supérieur à 250 °C. On peut citer à titre d'exemples :
- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools α-acétyléniques sont des produits du commerce.

Un tel régulateur est présent à raison de 3 000 ppm au maximum, de préférence à raison de 100 à 2000 ppm par rapport au poids total des organopolysiloxanes (a) et (e) voire (f).

Dans un mode de réalisation avantageux du procédé selon l'invention, on peut utiliser un promoteur d'adhérence (g). Ce promoteur d'adhérence (g) peut par exemple comprendre :
(g.1) au moins un organosilane alcoxylé répondant à la formule générale suivante : 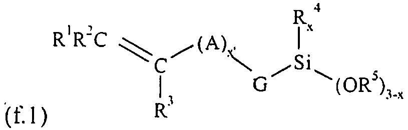 dans laquelle :
   - R¹, R², R³ sont des radicaux hydrogénés ou hydrocarbonés identiques ou différents entre eux et représentant l'hydrogène, un alkyle linéaire ramifié en C₁-C₄ ou un phényle éventuellement substitué par au moins un alkyle en C₁-C₃ ;
   - A est un alkylène linéaire ou ramifié en C₁-C₄ ;
   - G est un lien valenciel ; 4 5
   - R et R sont des radicaux identiques ou différents et représentent un alkyle en C₁-C₄ linéaire ou ramifié ;
   - x' = 0 ou 1
   - x = 0 à 2,
      ledit composé (g.1) étant de préférence du vinyltriméthoxysilane (VTMS) ;
(g.2) au moins un composé organosilicié comprenant au moins un radical époxy, ledit composé (g.2) étant de préférence du 3-Glycidoxypropyltiméthoxysilane (GLYMO) ;
(g.3) au moins un chélate de métal M et/ou un alcoxyde métallique de formule générale M (OJ)ₙ, avec n = valence de M et J = alkyle linéaire ou ramifié en C₁-C₈, M étant choisi dans le groupe formé par : Ti, Zr, Ge, Li, Mn, Fe, Al, Mg, ledit composé (g.3) étant de préférence du titanate de tert.butyle.

Les proportions des (g.1), (g.2) et (g.3), exprimée en % en poids par rapport au total des trois, sont de préférence les suivantes :
(g.1) ≥ 10,
(g.2) ≥ 10,
(g.3) ≤ 80.

Par ailleurs, ce promoteur d'adhérence (g) est de préférence présent à raison de 0,1 à 10 %, de préférence 0,5 à 5 % et plus préférentiellement encore 1 à 2,5 % en poids par rapport à l'ensemble des constituants de la composition.

Selon une variante la phase silicone de la composition comprend au moins une résine polyorganosiloxane (h), comportant éventuellement au moins un reste alcényle dans sa structure, et cette résine présente une teneur pondérale en groupe(s) alcényle(s) comprise entre 0,1 et 20 % en poids et, de préférence, entre 0,2 et 10 % en poids.

Ces résines sont des oligomères ou polymères organopolysiloxanes ramifiés bien connus et disponibles dans le commerce. Elles se présentent de préférence sous la forme de solutions siloxaniques. Elles comportent, dans leur structure, au moins deux motifs différents choisis parmi les motifs M, D, T et Q, l'un au moins de ces motifs étant un motif TouQ.

De préférence, ces résines sont alcénylées (vinylées). Comme exemples d'oligomères ou de polymères organopolysiloxanes ramifiés, on peut citer les résines MQ, les résines MDQ, les résines TD et les résines MDT, les fonctions alcényles pouvant être portées par les motifs M, D et/ou T. Comme exemple de résines qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.

Cette résine de structure est avantageusement présente dans une concentration comprise entre 10 et 70 % en poids par rapport à l'ensemble des constituants de la composition, de préférence entre 30 et 60 % en poids et, plus préférentiellement encore, entre 40 et 60 % en poids.

Concernant les additifs fonctionnels (i) habituellement utilisés dans le domaine des compositions polyorganosiloxanes vulcanisables à chaud et donc susceptibles d'être mis en oeuvre, il peut s'agir notamment :
➢ d'au moins un produit dit "antistructure" i1) ;
➢ et/ou d'au moins une résine polysiloxane i2) ;
➢ et/ou d'au moins un agent de stabilisation i3) ;
➢ et/ou d'au moins un agent de couplage i4) ;
➢ et/ou d'au moins un produit couvrant tel que par exemple un pigment/colorant ou un stabilisant i5) ;
➢ et/ou d'au moins un composé à base de bore i6).

Selon une modalité intéressante du procédé selon l'invention, la mise en forme et en place directe de l'adhésif liquide sur au moins l'un des supports à coller, dans leur zone de chevauchement, est une opération essentiellement manuelle, éventuellement réalisée à l'aide d'au moins un outil, de préférence d'extrusion et plus préférentiellement encore du type pistolet d'extrusion manuel à cartouche dotée d'un bec adapté.

La mise en contact intime des supports encollé(s) dans leur zone de chevauchement et le chauffage sont réalisés par exemple au moyen au moyen d'au moins un outil choisi dans le groupe comprenant : une pince, une barre, un galet; ledit outil étant équipé d'au moins un dispositif de chauffage, comprenant, par exemple, une ou plusieurs résistances électriques.

Les support fibreux plus spécialement envisagés conformément à l'invention, sont choisis dans le groupe de matériaux comprenant : le verre, la silice, les métaux, la céramique, le carbure de silicium, le carbone, le bore, les fibres naturelles comme le coton, la laine, le chanvre, le lin, les fibres artificielles comme la viscose, les fibres cellulosiques, les fibres synthétiques (de préférence les polyesters, les polyamides, les polyacryliques, les polymères chlorés, les polyoléfines, les caoutchoucs synthétiques, l'alcool polyvinylique, les aramides, les polymères fluorés, les polymères phénoliques).

Concernant les vernis susceptibles d'être appliqués sur les supports fibreux collés selon l'invention, il peut s'agir de vernis silicones, par exemple ceux réticulables par voie cationique et/ou radicalaire tels que ceux décrits dans la demande PCT WO 00/59992, ou de vernis silaniques à base de mélanges de silanes insaturés essentiellement.

Selon un autre de ses aspects la présente invention concerne un nouvel adhésif sélectionné parmi les silicones liquides à température ambiante et présentant les caractéristiques rhéologiques suivantes :
➢ borne de fluidité :
   viscosité Brookfield à 25°C en Pa.s:
      η ≥ 100 ; de préférence η ≥ 200
➢ vitesse d'extrusion :
   vitesse d'extrusion Ve en g.min⁻¹ mesurée selon un test Te défini dans la description:
      Ve ≤ 50 ; de préférence Ve ≤ 20;
   de composition suivante :
   (a) au moins un polyorganosiloxane (POS) présentant, par molécule, au moins deux groupes alcényles, de préférence en C₂-C₆ liés au silicium ;
   (b) une charge minérale renforçante,
   (c) une quantité catalytiquement efficace d'au moins un catalyseur :
      ➢ à base d'au moins un peroxyde organique
   (d) éventuellement une charge complémentaire;
   (f) éventuellement au moins un additif polyorganosiloxane dans lequel au moins 50% en nombre des atomes de silicium sont directement liés chacun à au moins un atome d'hydrogène;
   (g) éventuellement au moins un promoteur d'adhérence;
   (h) éventuellement au moins une résine polyorganosiloxane;
   (i) et éventuellement des additifs fonctionnels pour conférer des propriétés spécifiques.

De préférence, l'adhésif est choisi parmi les Elastomères Silicone Pompables (ESP) -pris à eux seuls ou en mélange entre eux- thermodurcissables par réticulation radicalaire à l'aide d'au moins un peroxyde.

Cet adhésif est destiné à être utilisé pour le collage de textiles ou de non-tissés enduits et/ou imprégnés de silicone.

Les exemples qui suivent permettent de mieux comprendre l'invention au travers de la description d'essais de collage de tissus enduits de silicone conformément au procédé selon l'invention ainsi que des compositions d'adhésifs mises oeuvre.

### EXEMPLES

### -1- Préparation de la colle

La colle est un élastomère silicone vulcanisable à chaud de la classe des Elastomères Silicones Pompables (ESP) ou des élastomères LSR (Liquid Silicone Rubber) habituellement trouvés sur le marché actuel. Les LSR se distinguent des ESP par leur principe de réticulation et par leur viscosité.

Les ESP sont des élastomères de composition voisine de celles des Elastomères Vulcanisables à Chaud mais de consistance bien moindre; ils restent néanmoins comme ces derniers réticulables par la voie peroxydique.

Des exemples de telles compositions sont donnés ci-dessous :

### -1.1- Descriptif de l'EVC de référence

Dans un malaxeur à bras de laboratoire on mélange :
- 100 parties en poids d'une gomme (a1) de copolymère silicone MDD^{Vi}M, qui titre 700 ppm en poids de groupements vinyliques répartis aléatoirement le long de la chaîne silicone;
- 7 parties en poids d'une gomme (a2) de copolymère silicone MDD^{Vi}M, qui titre 2,2% en poids de groupements vinyliques répartis aléatoirement le long de la chaîne silicone;
- 0,1 partie en poids de méthacryloxypropyltrimétoxysilane (promoteur d'adhérence (f));
- 0,9 parties en poids d'un polydiméthylsiloxane à terminaisons diméthylhydroxy de viscosité 50 mPa.s (agent de compatibilisation de la silice (b));
- 30 parties en poids d'une silice fumée (b) de surface 200m²/g traitée siloxane.

Le mélange bien homogène est alors repris sur un mélangeur à cylindres en vue de sa catalyse selon la recette :
- 100 parties en poids du mélange précédent;
- 1,2 partie de 2,5(diméthyl)2,5(ditertiobutylperoxy)hexane (catalyseur (c)).

### -1.2- Descriptif de la préparation des autres ESP mis en oeuvre dans le collage

La base de préparation des autres ESP utilisés dans le collage est un LSR I de RHODIA® Silicones, qui est une composition standard réticulable par addition ≡SiH /≡SiVi.

Il est présenté en deux parties A et B à combiner au moment de l'utilisation Les propriétés de l'élastomère résultant sont typiquement :
- dureté Shore A = 50
- résistance à la rupture = 8,5 MPa
- allongement à la rupture = 550 %
- résistance à la déchirure = 40 kN/m

Prises séparément ces deux parties ne peuvent pas réticuler puisque tous les éléments nécessaires à la réaction d'addition ne sont pas présents. Il est en revanche possible de leur ajouter un peroxyde ; chacune des parties se comporte alors comme un élastomère peroxydique : leur fluidité les catalogne dans la gamme des Elastomères Silicones Pompables.

Ainsi on prépare les mélanges suivants à l'aide d'un mélangeur centrifuge :
- LSR I.A/B de dureté 50, non conforme à l'invention :
   - 100 parties de LSR I.A contient le catalyseur Pt (inactif si A est utilisée seule) mais pas de SiH
   - 100 parties de LSR I.B contient le réticulant SiH
- ESP 1, non conforme à l'invention :
   - 100 parties de LSR I A
   - 0,6 partie de 2,5(diméthyl)2,5(ditertiobutylperoxy)hexane
- ESP 2, non conforme à l'invention :
   - 100 parties de LSR I B
   - 0,6 partie de 2,5(diméthyl)2,5(ditertiobutylperoxy)hexane
- ESP 3 :
   - 100 parties de LSR I B
   - 1,2 partie de 2,4 dichlorobenzoylperoxyde

### -2- Mise en oeuvre

Les ESP précédents sont déposés en place par extrusion sous la forme d'un ruban plat. Le second voile de textile enduit de silicone est alors appliqué en recouvrement du premier sur la colle.

A titre comparatif l'EVC de référence est mis en forme de bande par calandrage suivi d'un découpage de la feuille ainsi constituée. Le ruban de colle est alors interposé entre les deux voiles textiles à coller.

Le joint de colle pris en sandwich entre les textiles est alors disposé dans un système capable d'élever sa température à un niveau et selon une durée suffisante pour assurer sa réticulation.

Le système de chauffage est une pince permettant de chauffer et presser l'assemblage au niveau du collage.

La pression appliquée est ajustée selon la consistance du joint de colle. A titre indicatif, la pression appliquée dans le cas de l'EVC est de 100N/cm².

Les éprouvettes préparées sont ainsi constituées de :
- une première bande d'un voile textile enduit d'élastomère silicone,
- un joint de colle,
- une seconde bande du voile textile enduit d'élastomère silicone.

La colle est appliquée seulement sur la moitié de la longueur du complexe.

Dans les essais qui suivent, les supports testés sont formés par une enduction constituée par un textile enduit est un voile de polyester enduit au moyen d'un racle d'un élastomère silicone ES tel que décrit ci-après (coloré en gris / sans imprégnation). La couche élastomère ainsi ajustée à environ 200g/m² est réticulée en 10min à 150°C.

### Préparation de ES :

Dans un mélangeur à bras de 100 1, on introduit 40kg d'une huile de silicone α,ω divinylée de viscosité 1,5 Pa.s qui titre 0,1 meq de vinyle (Vi) par gramme d'huile, 0,24 kg d'eau potable et 0,24 kg d'hexaméthyldisilazane. Après homogénéisation, on rajoute par portions en à peu près 2 heures, 13,9 kg d'une silice de combustion caractérisée par sa surface spécifique de 200 m² /g. Après environ 1 heure de mélange, on rajoute en à peu près 1 heure 2,27 kg d'hexaméthyldisilazane. 2 heures plus tard, on commence une phase de chauffage au cours de laquelle le mélange est placé sous courant d'azote (30m³ /h) ; le chauffage continue jusqu'à atteindre environ 140° C, température palier qui est maintenue pendant 2 heures afin d'évacuer les matières volatiles de la composition. La suspension est alors laissée à refroidir.

Partant de cette suspension on formule une partie A' et une partie B' dans des réacteurs appropriés.

La partie A' contient :
320 g de la suspension,
111 g d'une huile α,ω divinylée de viscosité 100 Pa.s qui titre 0,03 meq Vi par gramme d'huile,
35 g de quartz broyé de granulométrie moyenne (d50) proche de 2,5 µm,
12 g d'une huile polyhydrogéno de viscosité 0,3 Pa.s qui titre 1,6 meq SiH par gramme d'huile,
12 g d'une huile α,ω dihydrogéno qui titre 1,9 meq SiH par gramme d'huile,
5 g de triméthoxysilane de γ méthacryloxypropyle,
5 g de triméthoxysilane de γ glycidoxypropyle,
0,7 g d'éthynylcyclohexanol.

La partie B' contient :
480 g de la suspension.
20 g d'orthotitanate de butyle,
1,1 g d'un catalyseur de Karstedt dosé à 10% de platine.

Les parties A' et B' sont mélangées dans le rapport de 100 à 10 et, après débullage.

### -3- Conditions opératoires

Dans un premier temps, on applique les conditions opératoires standard utilisées pour les assemblages avec EVC (P = 1-1.5 T / t = 3 min / T = 180°C).

Dans un deuxième temps, on fait varier la durée de réticulation et, pour le peroxyde 2.4 DCB la température de réticulation.

Tous les assemblages sont testés dans le sens trame (sens le moins favorable pour le collage). L'assemblage réalisé est testé dans une géométrie dite de pelage à 180°.

L'éprouvette test précédemment décrite mesure 5 cm de large.

Chacune des extrémités du complexe en vis à vis est prise dans les mors d'un dynamomètre en vue de la mesure de la force de pelage. La traction est réalisée à 50 mm/min.

Pour ce type de tissu, les différences de force de pelage entre le sens trame et le sens chaîne sont réduites (cf. essais LAF avec colle EVC : F= 150N en sens trame et F=185N en sens chaîne).

### Résultats

Ils sont présentés dans le tableau 1 ci-après.

**Tableau 1**

| | | CONDITIONS | | | E | E_{PELAGE} | |
|---|---|---|---|---|---|---|---|
| | | **P T** | **t min** | **T °C** | | | |
| COLLE | *Enduction* | | | | | | **LIEU DE LA RUPTURE** |
| *EVCr* | | 1 | 3 | 180 | 0.8 | **90** | |
| **LSR I A/B** | | 1 | 3 | 180 | 0.2 | **40** | |
| **ESP 1** | | 1 | 3 | 180 | Très faible | **17** | |
| | | 1 | 3 | 180 | Très faible | **50** | |
| **ESP 2** | | 1 | 3 | 180 | 1.1 | **30** | Interfaciale |
| | | 1.5 | 10 | 180 | 1.1 | **100** | Interfaciale |
| | | 1.5 | 3 | 120 | 1.2 | **20** | Dans la colle |
| **ESP 3** | | 1.5 | 3 | 120 | 1.2 | **5** | Interfaciale |
| | | 1.5 | 10 | 120 | 1.1 | **10** | Dans la colle |

| | | | | | | | |
|---|---|---|---|---|---|---|---|
| *EVCr* = *EVC de référence* E = Epaisseur colle en mm Fpelage en N/cm | | | | | | | |

### Discussion

Comparativement à l'EVCr, l'ESP et le LSR sont de mise en oeuvre notablement facilitée et leur performance est comparable.

ESP 2 s'avère le plus performant.

De bons collages peuvent aussi être obtenus à relativement basse température (120°C) dans le cas du peroxyde 2,4DCB : ESP 3.

## Revendications

1. Procédé de collage de supports fibreux, tissés ou non, comprenant au moins un revêtement silicone, ce procédé étant du type de ceux consistant à faire se chevaucher les supports à coller, un adhésif à base de silicone étant inséré entre les supports, sur au moins une partie de la zone de chevauchement ;
**caractérisé en ce qu'**il consiste essentiellement à :
• mettre en oeuvre au moins un adhésif silicone réticulable de la classe des Elastomères Silicones Pompables (ESP) thermodurcissable, par réticulation radicalaire à l'aide d'au moins un peroxyde, se présentant sous forme liquide (pâte fluide) à température ambiante et ayant les caractéristiques rhéologiques suivantes:
➢ borne de fluidité :
viscosité Brookfield à 25°C en Pa.s:
η ≥ 100, de préférence η ≥ 200
➢ vitesse d'extrusion :
vitesse d'extrusion Ve en g.min⁻¹ mesurée selon un test Te défini dans la description:
Ve ≤ 50, de préférence Ve ≤ 20;
• mettre cet adhésif liquide directement en forme et en place sur au moins l'un des supports à coller, dans leur zone de chevauchement ;
• maintenir en contact intime les supports encollés dans leur zone de chevauchement, de manière à éviter tout piégeage d'air à l'interface ;
• et à chauffer l'adhésif en place entre les supports ainsi maintenus en contact intime, de façon à permettre le collage des supports par réticulation de l'adhésif.

2. Procédé selon la revendication 1, **caractérisé en ce que** l'adhésif silicone liquide à température ambiante a la composition suivante :
(a) au moins un polyorganosiloxane (POS) présentant, par molécule, au moins deux groupes alcényles, de préférence en C₂-C₆ liés au silicium ;
(b) une charge minérale renforçante,
(c) une quantité catalytiquement efficace d'au moins un catalyseur :
➢ à base d'au moins un peroxyde organique
(d) éventuellement une charge complémentaire;
(f) éventuellement au moins un additif polyorganosiloxane dans lequel au moins 50% en nombre des atomes de silicium sont directement liés chacun à au moins un atome d'hydrogène;
(g) éventuellement au moins un promoteur d'adhérence;
(h) éventuellement au moins une résine polyorganosiloxane;
(i) et éventuellement des additifs fonctionnels pour conférer des propriétés spécifiques.

3. Procédé selon la revendication 2, **caractérisé en ce que** le polyorganosiloxane (a) choisi présente des motifs de formule :
Wₐ Z_{b} SiO_{(4-(a+b))/2} (a.1)
dans laquelle :
- W est un groupe alcényle,
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et a + b est compris entre 1 et 3,
au moins une partie des motifs (a.1) étant des motifs M (a+b=3);
et au moins une partie des autres motifs sont des motifs de formule moyenne :
Z_{c} SiO_{(4-c)/2} (a.2)
dans laquelle Z a la même signification que ci-dessus et c a une valeur comprise entre 0 et 3.

4. Procédé selon la revendication 2, **caractérisé en ce que** la charge (b) est sélectionnée parmi les silices de surface spécifique comprise entre 100 et 300 m²/g, ces silices étant éventuellement :
➢ prétraitées à l'aide d'au moins un agent de compatibilisation choisi dans le groupe des molécules qui satisfont à au moins deux critères :
❖ présenter une interaction forte avec la silice au niveau de ses liaisons hydrogène avec elle-même, et avec l'huile silicone environnante ;
❖ être elle-même, ou ses produits de dégradation, aisément évacués du mélange final par chauffage sous vide ou sous courant gazeux, et les composés de bas poids moléculaire sont donc préférés ;
➢ et/ou traitées in situ :
• de manière spécifique à l'aide d'au moins une silice non traitée;
• et/ou de manière complémentaire en utilisant au moins un agent de compatibilisation de nature similaire à celui utilisable en prétraitement et tel que défini ci-dessus.

5. Procédé selon la revendication 2, **caractérisé en ce que** la charge complémentaire (d) est sélectionnée dans le groupe comprenant : les silices colloïdales, les poudres de silice de combustion et de précipitation, les terres de diatomées, le quartz broyé le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte ou leurs mélanges.

6. Procédé selon la revendication 2, **caractérisé en ce que** le réticulant polyorganosiloxane (e) ou l'additif polyorganosiloxane (f) comporte le motif siloxyle de formule :
H_{d} Le SiO_{(4-(g+h))/2} (ef.1)
dans laquelle :
- L est un groupe hydrocarboné monovalent, exempt d'action défavorable sur l'activité du catalyseur et choisi parmi les groupes alkyles ayant de 1 à 8 atomes de carbone inclus (éventuellement substitués par au moins un atome d'halogène), avantageusement parmi les groupes méthyle, éthyle, propyle et 3,3,3-trifluoropropyle et ainsi que parmi les groupes aryles et, avantageusement, parmi les radicaux xylyle, tolyle et phényle,
- d est 1 ou 2, g est 0, 1 ou 2 et g + h a une valeur comprise entre 1 et 3 ;
au moins une partie des autres motifs étant éventuellement des motifs de formule moyenne :
Lg SiO_{(4-i)/2} (ef.2)
dans laquelle L a la même signification que ci-dessus et i a une valeur comprise entre 0 et 3;
les conditions propres à (e) : au moins 3 motifs ≡SiH par molécule : au moins 50% en nombre de motifs (e) à (f), s'appliquant par ailleurs.

7. Procédé selon la revendication 2, **caractérisé en ce que** la charge minérale (d) est sélectionnée parmi les matières siliceuses (ou non), renforçante ou semi-renforçante, de préférence dans le groupe comprenant les silices colloïdales, les poudres de silice de combustion et de précipitation, les terres de diatomées, le quartz broyé le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte ou leurs mélanges.

8. Procédé selon la revendication 1, **caractérisé en ce que** la mise en forme de l'adhésif liquide directement en place sur au moins l'un des supports à coller, dans leur zone de chevauchement, est une opération essentiellement manuelle, éventuellement réalisée à l'aide d'au moins un outil, de préférence d'extrusion et plus préférentiellement encore du type pistolet d'extrusion manuel à cartouche dotée d'un bec adapté.

9. Procédé selon la revendication 1, **caractérisé en ce que** la mise en contact intime des supports encollé(s) dans leur zone de chevauchement et le chauffage sont réalisés au moyen d'au moins un outil choisi dans le groupe comprenant : une pince, une barre, un galet; ledit outil étant équipé d'au moins un dispositif de chauffage.

10. Procédé selon l'une quelconque des revendications 1 à 9, **caractérisé en ce que** support fibreux est choisi dans le groupe de matériaux comprenant : le verre, la silice, les métaux, la céramique, le carbure de silicium, le carbone, le bore, les fibres naturelles comme le coton, la laine ,le chanvre, le lin, les fibres artificielles comme la viscose, les fibres cellulosiques, les fibres synthétiques (de préférence les polyesters, les polyamides, les polyacryliques, les polymères chlorés, les polyoléfines, les caoutchoucs synthétiques, l'alcool polyvinylique, les aramides, les polymères fluorés, les polymères phénoliques).

11. Adhésif sélectionné parmi les silicones, liquides à température ambiante et présentant les caractéristiques rhéologiques suivantes :
➢ borne de fluidité :
viscosité Brookfield à 25°C en Pa.s:
η ≥ 100 ; de préférence η ≥ 200
➢ vitesse d'extrusion :
vitesse d'extrusion Ve en g.min⁻¹ mesurée selon un test Te défini dans la description:
Ve ≤ 50 ; de préférence Ve ≤ 20 ;
de composition suivante :
(a) au moins un polyorganosiloxane (POS) présentant, par molécule, au moins deux groupes alcényles, de préférence en C₂-C₆ liés au silicium ;
(b) une charge minérale renforçante,
(c) une quantité catalytiquement efficace d'au moins un catalyseur :
➢ à base d'au moins un peroxyde organique
(d) éventuellement une charge complémentaire;
(f) éventuellement au moins un additif polyorganosiloxane dans lequel au moins 50% en nombre des atomes de silicium sont directement liés chacun à au moins un atome d'hydrogène ;
(g) éventuellement au moins un promoteur d'adhérence ;
(h) éventuellement au moins une résine polyorganosiloxane ;
(i) et éventuellement des additifs fonctionnels pour conférer des propriétés spécifiques.

## Claims

1. Process for the adhesive bonding of woven or nonwoven fibrous supports comprising at least one silicone coating, this process being of the type of those consisting in causing the supports to be adhesively bonded to overlap one another, a silicone-based adhesive being inserted between the supports over at least a portion of the region of overlap;
**characterized in that** it consists essentially in:
• employing at least one crosslinkable silicone adhesive of the class of the Pumpable Silicone Elastomers (PSE) thermosetting by radical crosslinking using at least one peroxide, which exists in the liquid (fluid paste) form at ambient temperature and which has the following rheological characteristics:
➢ limit of fluidity:
Brookfield viscosity at 25°C in Pa·s:
η ≥ 100, preferably η ≥ 200
➢ extrusion rate:
extrusion rate Er in g.min⁻¹, measured according to a test Et defined in the description:
Er ≤ 50, preferably Er ≤ 20;
• directly forming and deploying this liquid adhesive on at least one of the supports to be adhesively bonded, in their region of overlap;
• holding the adhesive-coated supports in intimate contact in their region of overlap, so as to prevent any trapping of air at the interface;
• and then heating the adhesive in place between the supports thus held in intimate contact, so as to make possible the adhesive bonding of the supports by crosslinking of the adhesive.

2. Process according to Claim 1, **characterized in that** the silicone adhesive which is liquid at ambient temperature has the following composition:
(a) at least one polyorganosiloxane (POS) exhibiting, per molecule, at least two alkenyl groups, preferably C₂-C₆ alkenyl groups, bonded to silicon;
(b) a reinforcing inorganic filler,
(c) a catalytically effective amount of at least one catalyst:
➢ based on at least one organic peroxide;
(d) optionally an additional filler;
(f) optionally at least one polyorganosiloxane additive in which at least 50% by number of the silicon atoms are directly bonded each to at least one hydrogen atom;
(g) optionally at least one adhesion promoter;
(h) optionally at least one polyorganosiloxane resin;
(i) and optionally functional additives for conferring specific properties.

3. Process according to Claim 2, **characterized in that** the polyorganosiloxane (a) chosen exhibits units of formula:
WₐZ_{b}SiO_{(4-(a+b))/2} (a.1)
in which:
- W is an alkenyl group,
- Z is a monovalent hydrocarbon group which has no unfavorable effect on the activity of the catalyst and which is chosen from alkyl groups having from 1 to 8 carbon atoms inclusive which are optionally substituted by at least one halogen atom and from aryl groups,
- a is 1 or 2, b is 0, 1 or 2 and a + b is between 1 and 3,
at least a portion of the units (a.1) being M units (a + b = 3);
and at least a portion of the other units are units of mean formula:
Z_{c}SiO_{(4-c)/2} (a.2)
in which Z has the same meaning as above and c has a value of between 0 and 3.

4. Process according to Claim 2, **characterized in that** the filler (b) is selected from silicas with a specific surface of between 100 and 300 m²/g, these silicas optionally being:
➢ pretreated using at least one compatibilizing agent chosen from the group of the molecules which satisfy at least two criteria:
❖ exhibits a strong interaction with the silica, at the level of its hydrogen bonds with itself, and with the surrounding silicone oil;
❖ is itself, or its decomposition products, easily discharged from the final mixture by heating under vacuum or under a gas stream, and compounds of low molecular weight are thus preferred;
➢ and/or treated in situ:
• specifically using at least one untreated silica,
• and/or, additionally, by using at least one compatibilizing agent similar in nature to that which can be used in pretreatment and as defined above.

5. Process according to Claim 2, **characterized in that** the additional filler (d) is selected from the group consisting of: colloidal silicas, fumed and precipitated silica powders, diatomaceous earths, ground quartz, carbon black, titanium dioxide, aluminum oxide, hydrated alumina, expanded vermiculite, zirconia, a zirconate, unexpanded vermiculite, calcium carbonate, zinc oxide, mica, talc, iron oxide, barium sulfate, slaked lime and their mixtures.

6. Process according to Claim2, **characterized in that** the polyorganosiloxane crosslinking agent (e) or the polyorganosiloxane additive (f) comprises the siloxyl unit of formula:
H_{d}LₑSiO_{(4-(g+h))/2} (ef.1)
in which:
- L is a monovalent hydrocarbon group which has no unfavorable effect on the activity of the catalyst and which is chosen from alkyl groups having from 1 to 8 carbon atoms inclusive (optionally substituted by at least one halogen atom), advantageously from the methyl, ethyl, propyl and 3,3,3-trifluoropropyl groups, and from aryl groups, advantageously from the xylyl, tolyl and phenyl radicals,
- d is 1 or 2, g is 0, 1 or 2 and g + h has a value of between 1 and 3;
at least a portion of the other units optionally being units of mean formula:
L_{g}SiO_{(4-i)/2} (ef.2)
in which L has the same meaning as above and i has a value of between 0 and 3;
the conditions specific to (e): at least 3 ≡SiH units per molecule: at least 50% by number of (e) to (f) units, furthermore applying.

7. Process according to Claim 2, **characterized in that** the inorganic filler (d) is selected from reinforcing or semireinforcing siliceous (or nonsiliceous) materials preferably from the group consisting of colloidal silicas, fumed and precipitated silica powders, diatomaceous earths, ground quartz, carbon black, titanium dioxide, aluminum oxide, hydrated alumina, expanded vermiculite, zirconia, a zirconate, unexpanded vermiculite, calcium carbonate, zinc oxide, mica, talc, iron oxide, barium sulfate, slaked lime and their mixtures.

8. Process according to Claim 1, **characterized in that** the forming of the liquid adhesive directly in place g in a direct fashion of the liquid adhesive on at least one of the supports to be adhesively bonded in their region of overlap is an essentially manual operation optionally carried out using at least one tool, preferably an extrusion tool and more preferably still of the type consisting of a manual extrusion gun with a cartridge having an appropriate nozzle.

9. Process according to Claim 1, **characterized in that** the operation in which the adhesive-coated supports are brought into intimate contact in their region of overlap and the heating are carried out using at least one tool chosen from the group consisting of: a clamp, a bar and a roller; said tool being equipped with at least one heating device.

10. Process according to any one of Claims 1 to 9, **characterized in that** the fibrous support is chosen from the group of materials consisting of: glass, silica, metals, ceramic, silicon carbide, carbon, boron, natural fibers, such as cotton, wool, hemp or flax, artificial fibers, such as viscose, cellulose fibers and synthetic fibers (preferably polyesters, polyamides, polyacrylics, chlorinated polymers, polyolefins, synthetic rubbers, poly(vinyl alcohol), aramids, fluoropolymers or phenolic polymers).

11. Adhesive selected from silicones which are liquid at ambient temperature and which exhibit the following rheological characteristics:
➢ limit of fluidity:
Brookfield viscosity at 25°C in Pa·s:
η ≥ 100; preferably η ≥ 200
➢ extrusion rate:
extrusion rate Er in g.min⁻¹, measured according to a test Et defined in the description:
Er ≤ 50; preferably Er ≤ 20;
with the following composition:
(a) at least one polyorganosiloxane (POS) exhibiting, per molecule, at least two alkenyl groups, preferably C₂-C₆ alkenyl groups, bonded to silicon;
(b) a reinforcing inorganic filler,
(c) a catalytically effective amount of at least one catalyst:
➢ based on at least one organic peroxide;
(d) optionally an additional filler;
(e) optionally at least one polyorganosiloxane crosslinking agent exhibiting, per molecule, at least three hydrogen atoms bonded to silicon;
(f) optionally at least one polyorganosiloxane additive in which at least 50% by number of the silicon atoms are directly bonded each to at least one hydrogen atom;
(g) optionally at least one adhesion promoter;
(h) optionally at least one polyorganosiloxane resin;
(i) and optionally functional additives for conferring specific properties.

## Patentansprüche

1. Verfahren zum Verkleben gewebter oder nichtgewebter, faserförmiger Träger, umfassend mindestens eine Silikonbeschichtung, wobei das Verfahren von dem Typ ist, bei dem man die zu verklebenden Träger sich überlappen lässt, wobei ein Klebstoff auf Silikonbasis zwischen die Träger auf mindestens einen Teil der Überlappungszone eingebracht wird,
**dadurch gekennzeichnet, dass** es im Wesentlichen aus Folgendem besteht:
• Verwenden mindestens eines vernetzbaren Silikonklebstoffs aus der Klasse der Flüssigsilikonkautschuke (LSR), die durch radikalische Vernetzung mithilfe mindestens eines Peroxids wärmehärtbar sind, der bei Umgebungstemperatur in flüssiger Form (fließfähige Masse) vorliegt und folgende rheologischen Eigenschaften besitzt:
➢ Fließfähigkeitsgrenze:
Brookfield-Viskosität bei 25°C in Pa.s:
η ≥ 100, vorzugsweise η ≥ 200
➢ Extrusionsgeschwindigkeit:
Extrusionsgeschwindigkeit Ve in g.min⁻¹, gemäß dem in der Beschreibung definierten Te-Test gemessen,
Ve ≤ 50, vorzugsweise Ve ≤ 20,
• direktes in Form Bringen und Aufbringen des flüssigen Klebstoffs auf mindestens einen der zu verklebenden Träger in der Überlappungszone,
• Halten der verklebten Träger in innigem Kontakt in ihrer Überlappungszone, derart, dass jegliches Einfangen von Luft an der Grenzfläche vermieden wird,
• und Erhitzen des Klebstoffs an Ort und Stelle zwischen den Trägern, die so in innigem Kontakt gehalten werden, derart, dass die Verklebung der Träger durch Vernetzung des Klebstoffs erzielt wird.

2. Verfahren nach Anspruch 1, **dadurch gekennzeichnet, dass** der bei Umgebungstemperatur flüssige Silikonklebstoff folgende Zusammensetzung besitzt:
(a) mindestens ein Polyorganosiloxan (POS), das pro Molekül mindestens zwei, vorzugsweise C₂-C₆-, Alkenylgruppen aufweist, die an das Silizium gebunden sind,
(b) einen verstärkenden mineralischen Füllstoff,
(c) eine katalytisch wirksame Menge mindestens eines Katalysators:
➢ auf der Basis mindestens eines organischen Peroxids,
(d) gegebenenfalls einen zusätzlichen Füllstoff,
(f) gegebenenfalls mindestens ein Polyorganosiloxan-Additiv, in dem mindestens 50% der Siliziumatome, bezogen auf die Anzahl, jeweils direkt an mindestens ein Wasserstoffatom gebunden sind,
(g) gegebenenfalls mindestens ein Haftungsförderungsmittel,
(h) gegebenenfalls mindestens ein Polyorganosiloxanharz
(i) und gegebenenfalls funktionelle Additive zum Verleihen spezifischer Eigenschaften.

3. Verfahren nach Anspruch 2, **dadurch gekennzeichnet, dass** das ausgewählte Polyorganosiloxan (a) Motive der folgenden Formel aufweist:
Wₐ Z_{b} SiO_{(4-(a+b))/2} (a.1),
worin:
- W für eine Alkenylgruppe steht,
- Z eine einwertige Kohlenwasserstoffgruppe ohne ungünstige Wirkung auf die Aktivität des Katalysators ist und ausgewählt ist aus Alkylgruppen mit 1 bis einschließlich 8 Kohlenstoffatomen, die gegebenenfalls mit mindestens einem Halogenatom substituiert sind, sowie aus Arylgruppen,
- a für 1 oder 2 steht, b für 0, 1 oder 2 steht und a + b zwischen 1 und 3 ist,
wobei mindestens ein Teil der Motive (a.1) Motive M (a+b=3) sind
und mindestens ein Teil der anderen Motive der folgenden Durchschnittsformel entsprechen:
Z_{c} SiO_{(4-c)/2} (a.2),
worin Z dieselbe Bedeutung wie vorstehend hat und c einen Wert zwischen 0 und 3 hat.

4. Verfahren nach Anspruch 2, **dadurch gekennzeichnet, dass** der Füllstoff (b) aus Siliziumdioxiden mit einer spezifischen Oberfläche zwischen 100 und 300 m²/g ausgewählt wird, wobei diese Siliziumdioxide gegebenenfalls:
➢ mithilfe mindestens eines Kompatibilisierungsmittels vorbehandelt werden, das aus der Gruppe der Moleküle ausgewählt wird, die mindestens zwei Kriterien erfüllen:
❖ sie weisen eine starke Wechselwirkung mit dem Siliziumdioxid an dessen Wasserstoffbindungen mit sich selbst und mit dem umgebenden Silikonöl auf,
❖ sie selbst oder ihre Abbauprodukte lassen sich leicht durch abschließendes Erhitzen unter Vakuum oder unter einem Gasstrom austreiben und somit sind niedermolekulare Verbindungen bevorzugt,
➢ und/oder in situ behandelt werden:
• spezifisch mithilfe eines unbehandelten Siliziumdioxids
• und/oder ergänzend unter Verwendung mindestens eines Kompatibilisierungsmittels derselben Art wie dasjenige, das zur Vorbehandlung verwendet werden kann und wie vorstehend definiert ist.

5. Verfahren nach Anspruch 2, **dadurch gekennzeichnet, dass** der zusätzliche Füllstoff (d) aus der Gruppe ausgewählt wird, umfassend: kolloidale Siliziumdioxide, pyrogene oder gefällte Siliziumdioxidpulver, Diatomeenerden, Quarzmehl, Rußschwarz, Titandioxid, Aluminiumoxid, Aluminiumhydroxid, geblähten Vermiculit, Zirkon, ein Zirkonat, nicht geblähten Vermiculit, Calciumcarbonat, Zinkoxid, Glimmer, Talk, Eisenoxid, Bariumsulfat und gelöschten Kalk oder deren Gemische.

6. Verfahren nach Anspruch 2, **dadurch gekennzeichnet, dass** der Polyorganosiloxan-Vernetzer (e) oder das Polyorganosiloxan-Additiv (f) das Siloxylmotiv der folgenden Formel enthält:
H_{d} Lₑ SiO_{(4-(g+h))/2} (ef.1),
worin:
- L für eine einwertige Kohlenwasserstoffgruppe ohne ungünstige Wirkung auf die Aktivität des Katalysetors steht und aus Alkylgruppen mit 1 bis einschießlich 8 Kohlenstoffatomen (die gegebenenfalls mit mindestens einem Halogenatom substituiert sind), vorzugsweise aus Methyl-, Ethyl-, Propyl- und 3,3,3-Trifluorpropylgruppen, sowie aus Arylgruppen und vorteilhafterweise aus Xylyl-, Tolyl- und Phenylresten ausgewählt wird,
- d für 1 oder 2 steht, g für 0, 1 oder 2 steht und g + h einen Wert zwischen 1 und 3 hat,
wobei mindestens ein Teil der anderen Motive gegebenenfalls Motive der folgenden Durchschnittsformel sind:
Lg SiO_{(4-i)/2} (ef.2),
worin L dieselbe Bedeutung hat wie vorstehend und i einen Wert zwischen C und 3 hat,
wobei außerdem für (e) die folgenden Bedingungen gelten: mindestens 3 Motive ≡SiH pro Molekül : mindestens 50%, bezogen auf die Anzahl, der Motive (e) bis (f).

7. Verfahren nach Anspruch 2, **dadurch gekennzeichnet, dass** der verstärkende oder halbverstärkende mineralische Füllstoff (d) ausgewählt ist aus siliziumhaltigen (oder nicht-siliziumhaltigen) Materialien, vorzugsweise aus der Gruppe, umfassend kolloidale Siliziumdioxide, pyrogene oder ausgefällte Siliziumdioxidpulver, Diatomeenerden, Quarzmehl, Rußschwarz, Titandioxid, Aluminiumoxid, Aluminiumhydroxid, geblähten Vermiculit, Zirkon, ein Zirkonat, nicht geblähten Vermiculit, Calciumcarbonat, Zinkoxid, Glimmer, Talk, Eisenoxid, Bariumsulfat und gelöschten Kalk oder deren Gemische.

8. Verfahren nach Anspruch 1, **dadurch gekennzeichnet, dass** das in Form Bringen des flüssigen Klebstoffs direkt an Ort und Stelle auf mindestens einem der zu verklebenden Träger in deren Überlappungszone ein im Wesentlichen manueller Arbeitsschritt ist, der gegebenenfalls mithilfe eines Werkzeugs durchgeführt wird, vorzugsweise mithilfe eines Extrusionswerkzeugs und noch stärker bevorzugt des Typs einer manuellen, mit einem passendem Beutel versehenen Kartuschen-Ausdrückpistole.

9. Verfahren nach Anspruch 1, **dadurch gekennzeichnet, dass** das in innigen Kontakt Bringen der verklebten Träger in ihrer Überlappungszone und das Erhitzen mithilfe mindestens eines Werkzeugs durchgeführt werden, das aus der Gruppe ausgewählt wird, umfassend: eine Zange, einen Stab, eine Rolle, wobei das Werkzeug mit mindestens einem Mittel zum Erhitzen ausgerüstet ist.

10. Verfahren nach einem der Ansprüche 1 bis 9, **dadurch gekennzeichnet, dass** der faserförmige Träger aus der Gruppe der Materialien ausgewählt wird, umfassend Glas, Siliziumdioxid, Metalle, Keramik, Siliziumcarbid, Kohlenstoff, Bor, natürliche Fasern, wie Baumwolle, Wolle, Hanf, Lein, Kunstfasern, wie Viskose, Cellulosefasern, synthetische Fasern (vorzugsweise Polyester, Polyamide, Polyacryle, chlorierte Polymere, Polyolefine, synthetische Kautschuke, Polyvinylalkohol, Aramide, fluorierte Polymere, Phenolpolymere).

11. Klebstoff, ausgewählt aus Silikonen, die bei Umgebungstemperatur flüssig sind und folgende rheologischen Eigenschaften aufweisen:
➢ Fließfähigkeitsgrenze:
Brookfield-Viskosität bei 25°C in Pa.s:
η ≥ 100, vorzugsweise η ≥ 200
➢ Extrusionsgeschwindigkeit:
Extrusionsgeschwindigkeit Ve in g.min⁻¹, gemäß dem in der Beschreibung definierten Te-Test gemessen,
Ve ≤ 50, vorzugsweise Ve ≤ 20, der folgenden Zusammensetzung:
(a) mindestens ein Polyorganosiloxan (POS), das pro Molekül mindestens zwei, vorzugsweise C₂-C₆-, Alkenylgruppen aufweist, die an das Silizium gebunden sind,
(b) einen verstärkenden mineralischen Füllstoff,
(c) eine katalytisch wirksame Menge mindestens eines Katalysators:
➢ auf der Basis mindestens eines organischen Peroxids,
(d) gegebenenfalls einen zusätzlichen Füllstoff,
(f) gegebenenfalls mindestens ein Polyorganosiloxan-Additiv, in dem mindestens 50% der Siliziumatome, bezogen auf die Anzahl, jeweils direkt an mindestens ein Wasserstoffatom gebunden sind,
(g) gegebenenfalls mindestens ein Haftungsförderungsmittel,
(h) gegebenenfalls mindestens ein Polyorganosiloxanharz
(i) und gegebenenfalls funktionelle Additive zum Verleihen spezifischer Eigenschaften.
